# EUROPÄISCHE PATENTSCHRIFT

(11) **EP 1 745 964 B1**
(45) Veröffentlichungstag und Bekanntmachung des Hinweises auf die Patenterteilung: **23.11.2011**
(21) Anmeldenummer: 06014208.0
(22) Anmeldetag: 08.07.2006
(51) Int. Cl.: B60J 7/20, B60J 7/22

(54) **Verdeckkastendeckel mit integriertem Windschott für ein Cabrioletfahrzeug sowie Cabrioletfahrzeug**
Cover for roof storage compartment with integrated wind deflector for a cabriolet vehicle and such a vehicle
Couvercle de coffre de toit avec un déflecteur de vent intégré pour un cabriolet et véhicule cabriolet comprenant un tel couvercle

(30) Priorität: 20.07.2005 DE 102005033805
(43) Veröffentlichungstag der Anmeldung: 24.01.2007
(73) Patentinhaber: Wilhelm Karmann GmbH, 49084 Osnabrück (DE)
(72) Erfinder: Jahn, Jorg, 32257 Bünde (DE)
(74) Vertreter: Kronthaler, Schmidt & Coll.

(56) Entgegenhaltungen:
- DE-A1- 4 446 483
- DE-A1- 19 535 593
- DE-A1- 19 629 457
- DE-C1- 4 037 705
- DE-C1- 4 311 240

## Beschreibung

Die Erfindung betrifft ein Verdeckkastendeckel mit integriertem Windschott für ein Cabrioletfahrzeug. Die Erfindung betrifft weiter ein Cabrioletfahrzeug, das einen solchen Verdeckkastendeckel enthält.

Moderne Cabrioletfahrzeuge sind zunehmend mit sogenannten Windschotts ausgestattet. Ein solches Windschott ist beispielsweise ein hinter den Kopfstützen der Vordersitze hochstehendes flächiges Bauteil, das verhindert, dass der Kopf einer auf einem Vordersitz sitzenden Person von einer starken Strömung umströmt wird. Vorteilhafterweise ist auch der Raum zwischen dem Unterrand des Windschotts, der sich beispielsweise in Höhe der Oberränder der Sitzlehnen der Vordersitze befindet, und dem rückwärtigen Innenraumabschluss in Höhe der Gürtellinie des Fahrzeugs von einem flächigen Bauteil verschlossen bzw. überdeckt.

In der DE 39 35 630 C2 ist ein Cabrioletfahrzeug mit einem Windschutz beschrieben, der hinter den Sitzen angeordnet ist und sich zumindest über einen Teil der Fahrzeugbreite erstreckt. Der Windschutz kann aus einer abgesenkten Ruhelage in eine über die Gürtellinie nach oben gerichtete Wirkstellung bewegt werden und ist um eine quer zur Längsrichtung des Fahrzeug verlaufenden Achse schwenkbar an einem Verdeckkastendeckel gelagert.

Aus der DE 195 35 593 A1 ist ein Cabrioletfahrzeug mit einem Windschott bekannt, das um eine quer zur Längsrichtung des Fahrzeugs verlaufende Achse schwenkbar an einem Verdeckkastendeckel angeordnet ist. In einer Ruhestellung befindet sich das Windschott auf der Oberseite des Verdeckkastendeckels und kann von dort in eine nach oben über die Gürtel-Linie des Cabrios hinausreichende Gebrauchsstellung verschwenkt werden. Das Windschott ist in Ruhestellung weitgehend in die Kontur des Verdeckkastendeckels integriert.

Aus der DE 43 11 240 C1 ist ein Verdeckkastendeckel mit integrierten Windschott bekannt, bei dem an dem Verdeckkastendeckel schwenkbar ein Abdeckteil gelagert ist, an dem wiederum das eigentliche Windschott schwenkbar gelagert ist. In einer Ruhestellung ist das Windschott an das Abdeckteil herangeschwenkt und ist das Abdeckteil an eine Unterseite des Verdeckkastendeckels geschwenkt, so dass die gesamte Anordnung in den Verdeckkastendeckel integriert ist. In Gebrauchsstellung ist das Abdeckteil aus dem Verdeckkastendeckel herausgeschwenkt und das Windschott aus der Anlage an das Abdeckteil in eine nach oben ragende Stellung verschwenkt. Das Abdeckteil deckt in Gebrauchsstellung einen vor dem Verdeckkastendeckel befindlichen Teil des Fahrzeuginnenraums ab und das Windschott steht von dem in Fahrtrichtung zeigenden Rand des Abdeckteils nach oben vor.

In der DE 196 29 457 A1, von der im Oberbegriff des neuen Anspruchs 1 ausgegangen wird, ist ein Verdeckkastendeckel für ein Cabrioletfahrzeug beschrieben, der an seinem in Fahrtrichtung des Fahrzeugs vorderen Ende einen Schlitz aufweist, durch den hindurch eine Windschutzeinrichtung ausfahrbar ist, die aus einem Abdeckteil aus biegeschlaffen Stoff und einem daran angebrachten, verschwenkbaren Windschott besteht. Das Abdeckteil ist von einer in dem Verdeckkastendeckel aufgenommenen Aufrollvorrichtung rolloartig abwickelbar. Zur Seitenführung der Windschutzeinrichtung beim Ein- und Ausfahren sind fahrzeugfeste Führungsschienen für die Seitenränder des Abdeckteils vorgesehen.

Der Erfindung liegt die Aufgabe zugrunde, einen Verdeckkastendeckel mit integriertem Windschott zu schaffen, bei dem bei einfachem Aufbau die Lage des Windschotts an unterschiedliche Stellungen der Sitze anpassbar ist.

Diese Aufgabe wird mit den Merkmalen des Anspruchs 1 gelöst.

Dadurch, dass bei dem erfindungsgemässen Verdeckkastendeckel das Abdeckteil einen verschiebbar an dem Verdeckkastendeckel angebrachten Rahmen enthält, kann es verschieden weit aus dem Verdeckkastendeckel ausgefahren werden, so dass die abgerollte Rollolänge und die Lage des an dem Rahmen angebrachten Windschotts an eine Längsverstellung der Sitze oder eine Verstellung der Lehnenneigung angepasst werden kann.

Die Unteransprüche 2 bis 5 sind auf vorteilhafte Ausführungsformen und Weiterbildungen des erfindungsgemäßen Verdeckkastendeckels gerichtet.

Der Anspruch 6 kennzeichnet ein einen erfindungsgemäßen Verdeckkastendeckel enthaltendes Cabrioletfahrzeug, das mit den Merkmalen des Anspruchs 7 vorteilhaft weitergebildet wird.

Die Erfindung wird im Folgenden anhand schematischer Zeichnungen beispielsweise und mit weiteren Einzelheiten erläutert.

In den Figuren stellen dar:
- Fig. 1: eine Seitenansicht auf einen teilweise ausgeschnittenen Heckbereich eines Cabrioletfahrzeugs,
- Fig. 2: einen Ausschnitt der Figur 1 in vergrößerter Darstellung mit in Ruhestellung befindlichem Verdeckkastendeckel mit darin integriertem Abdeckteil und Windschott,
- Fig. 3 bis 7: Ansichten ähnlich der Figur 2 mit unterschiedlichen Stellungen des Verdeckkastendeckels, Abdeckteils und Windschotts,
- Fig. 8: eine Aufsicht auf den Heckbereich eines Cabrioletfahrzeugs mit in Gebrauchsstellung befindlichem Windschott und
- Fig. 9: eine Seitenansicht auf das Cabrioletfahrzeug gemäß Figur 8.

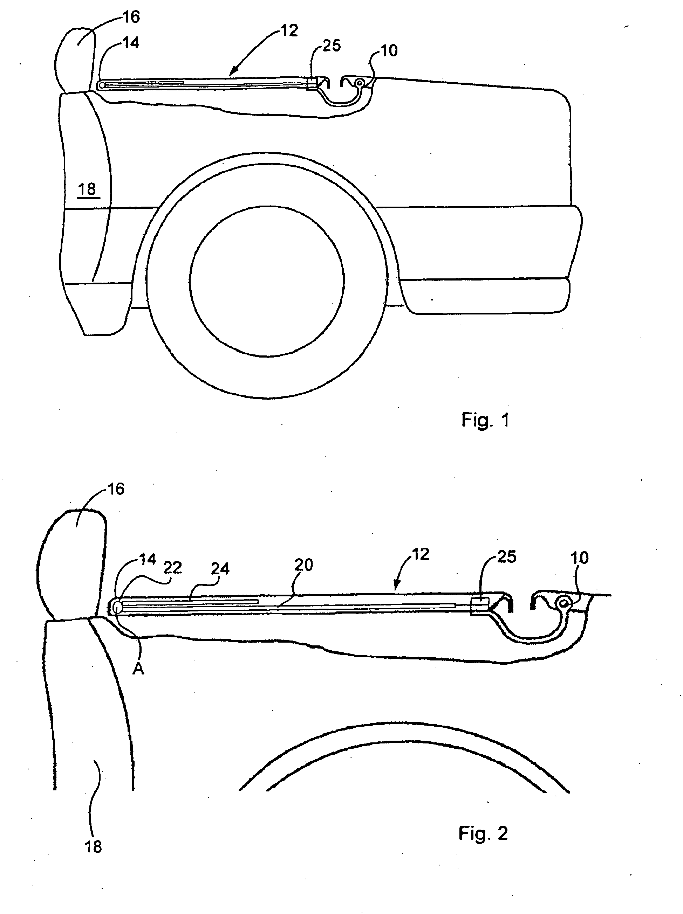

Gemäß Figur 1 weist ein Cabrioletfahrzeug in an sich bekannter Weise einen in seinem Heckbereich in Fahrtrichtung des Fahrzeugs vor einer nicht im Einzelnen dargestellten Kofferklappe mittels an jeder Seite des Fahrzeugs angeordneter Scharniere 10 schwenkbar angebrachten Verdeckkastendeckel 12 auf, dessen Vorderrand 14 hinter Kopfstützen 16 von Fondsitzen 18 des Fahrzeugs angeordnet ist. In der in Figur 1 dargestellten Ruhestellung des Verdeckkastendeckels 12 verläuft dessen Oberfläche etwa bündig mit den angrenzenden Oberflächen der Fahrzeugkarosserie.

Wie in Figur 2 deutlicher als in Figur 1 ersichtlich, ist in den Verdeckkastendeckel 12 ein Abdeckteil 20 integriert, an dessen den Vorderrand 14 zugewandtem Vorderrand 22 um eine Achse A schwenkbar ein Windschott 24 gelagert ist.

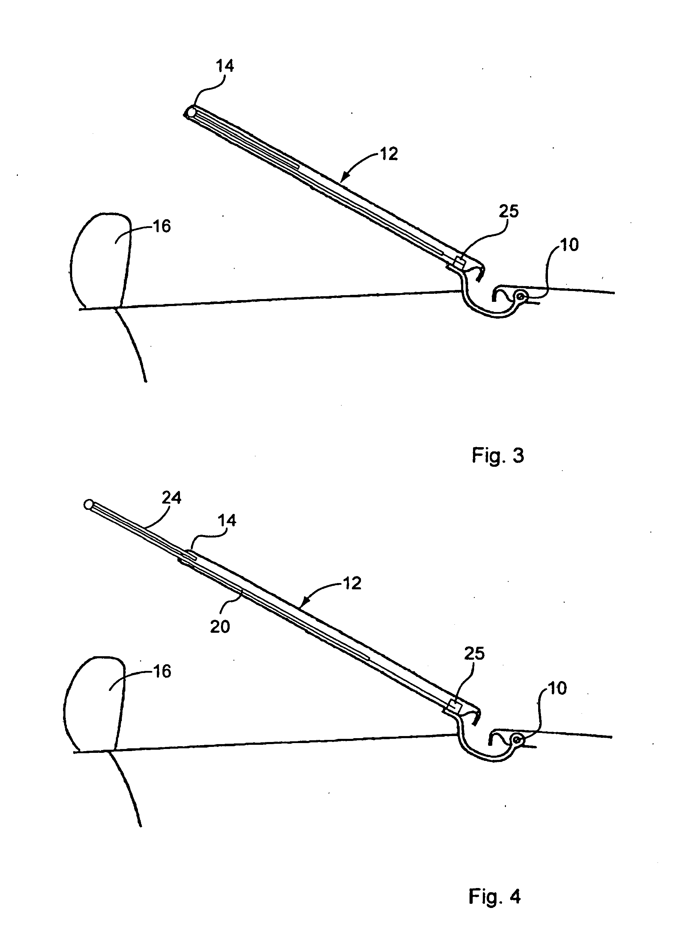

Der Verdeckkastendeckel 12 kann gemäß Figur 3 in an sich bekannter Weise in Uhrzeigerrichtung aufwärts verschwenkt werden, wobei die in Figur 3 nur teilweise gezeigte Verschwenkbarkeit ein Verschwenken des Verdeckkastendeckels 12 bis in einer etwa senkrechte Stellung zulässt, in der ein in einem nicht dargestellten in Ruhestellung des Verdeckkastendeckels 12 von ihm abgedecktes und in einem Verdeckkasten aufgenommenes Verdeck geschlossen werden kann. Beim Schließen (und Öffnen) des Verdecks kann ein hinterer Teil des Verdecks in an sich bekannter Weise in Gegenuhrzeigerrichtung hochgeklappt werden, so dass der Verdeckkastendeckel 12 unter dem hochgeklappten rückwärtigen Teil des Verdecks in seine Ruhestellung gemäß Figur 1 zurückgeschwenkt werden kann und der rückwärtige Teil des Verdecks dann auf den über dem leeren Verdeckkasten angeordneten Verdeckkastendeckel angesenkt werden kann.

Wie in Figur 4 dargestellt, kann bei etwas hoch geschwenktem Verdeckkastendeckel 12 das Abdeckteil 20 das in dem Verdeckkastendeckel 12 oder zumindest unter dessen Unterseite verschiebbar angeordnet ist, mittels eines nicht im Einzelnen dargestellten Antriebsmechanismus 25 aus dem Verdeckkastendeckel 12 herausbewegt werden, so dass das Abdeckteil 20 mit angeklapptem Windschott 24 den Verdeckkastendeckel 12 nach vorne hin verlängert.

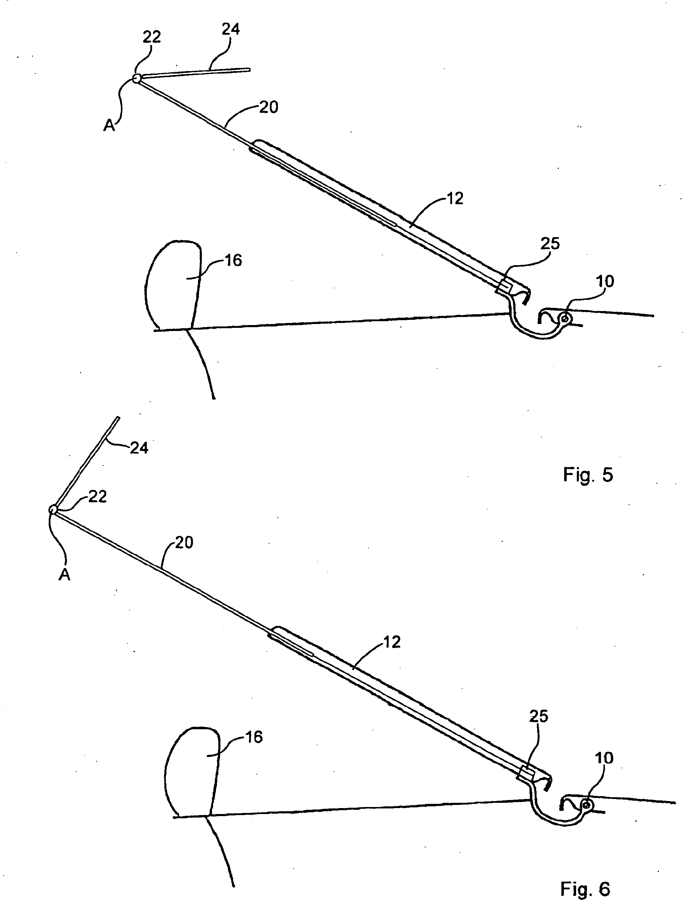

Sobald das Abdeckteil 20 so weit aus dem Verdeckkastendeckel 12 herausbewegt ist, dass das Windschott 24 den Verdeckkastendeckel 12 nicht mehr überlappt (auf Figur 5), kann das Windschott 24 um die Achse A in Gegenuhrzeigerrichtung verschwenkt werden, bis es gemäß Figur 6 etwa senkrecht zum Abdeckteil 20 gerichtet ist, dass in der Stellung gemäß Figur 6 weitest möglich aus dem Verdeckkastendeckel 12 herausbewegt ist.

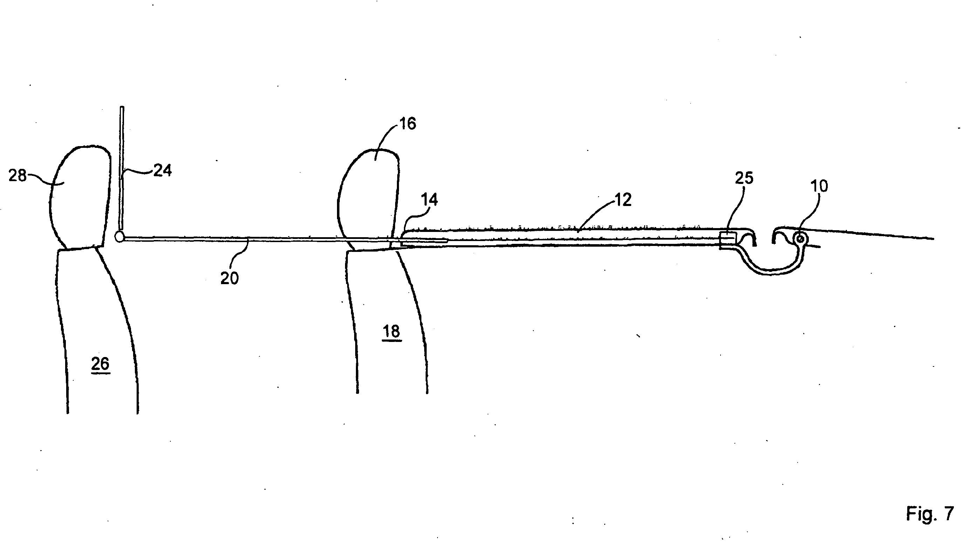

In der Stellung gemäß Figur 6, in der das Abdeckteil 20 und das Windschott 24 ihre Gebrauchsstellung einnehmen, kann der Verdeckkastendeckel 12 in die Stellung gemäß Figur 7 bzw. gemäß Figur 1 abgesenkt werden, in der er den nicht dargestellten Verdeckkasten schließt und bündig mit der Außenhaut der Karosserie verläuft. Das vollständig ausgefahrene Abdeckteil 20 weist in seinem an den Vorderrand 14 des Verdeckkastendeckels 12 anschließenden Bereich Aussparungen auf, durch die im dargestellten Beispiel die Kopfstützen 16 der Vordersitze 18 hindurchragen, so dass sie nicht abgenommen werden müssen. Dies ist insbesondere dann wichtig, wenn die Kopfstützen 16 beispielsweise integrierter Bestandteil eines Überschlagsicherungssystems sind. Im Übrigen überdeckt das Abdeckteil 20 den zwischen den nicht besetzten Vordersitzen 18 und Vordersitzen 26 befindlichen Innenraum des Fahrzeugs. Das Windschott 24 steht unmittelbar hinter den Kopfstützen 28 aufrecht nach oben und überragt die Kopfstützen 28.

Das Windschott kann beispielsweise durch einen mit einem feinmaschigen Netz bespannten Rahmen gebildet sein, wobei der Rahmen verschwenkbar an dem Abdeckteil 20 angebracht ist.

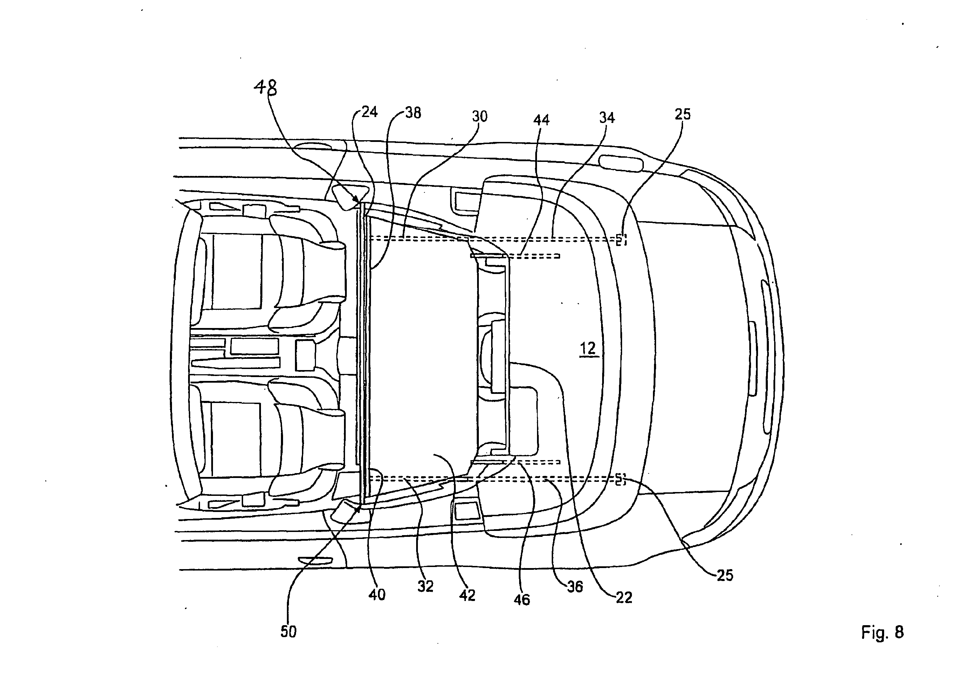

Das Abdeckteil 20 kann beispielsweise einen in Aufsicht U-förmigen Rahmen aufweisen, dessen seitliche Stege 30, 32 (Figur 8) in am Verdeckkastendeckel 12 ausgebildeten Führungen 34 und 36 längs verschiebbar geführt sind oder beispielsweise teleskopartig ausgebildet sind. Die Basis 38 des Rahmens, an der das Windschott 24 schwenkbar gelagert ist, bildet beispielsweise die Halterung für eine Wickelwelle 40 von der gemäß Figur 8 ein Behang 42 abgewickelt ist, dessen freies Ende mittels Gurten 44, 46 an dem Verdeckkastendeckel 12 befestigt sind. Auf diese Weise wird beim Ausfahren des den Rahmen und das Rollo enthaltenden Abdeckteils 20 aus dem Verdeckkastendeckel 12 der Behang unter Spannung der Gurte 44, 46 von der in Aufwickelrichtung vorgespannten Wickelwelle 40 in den Zustand gemäß Figur 8 abgewickelt, in dem zwischen den Gurten 44 und 46 und zwischen dem Vorderrand 22 des Verdeckkastendeckels 12 und dem freien Rand des Behangs 42 eine Aussparung frei bleibt, durch die hindurch die Kopfstützen 16 der Rücksitze vorstehen.

Zum Antrieb der Verschiebung des Abdeckteils 20 relativ zum Verdeckkastendeckel 12 kann jedwelcher geeignete Mechanismus 25 dienen, beispielsweise ein elektromotorischer Spindeltrieb, der in die Führungen 34 bzw. 36 integriert ist, ein Hydraulikzylinder usw.

Zum Verschwenken des Windschotts 24 aus der an das Abdeckteil 20 angeklappten Stellung in die ausgeklappte Gebrauchsstellung kann ein eigener Antrieb, beispielsweise ein Elektromotor vorgesehen sein. Das Windschott kann auch über einen Seilzug betätigt werden, der beim Ausfahren des Abdeckteils 20 gespannt wird und das Windschott beim Erreichen der Endstellung des Abdeckteils 20 aufstellt. Es versteht sich, dass in diesem Fall das Windschott mittels einer geeigneten Torsionsfeder in seine an dem Abdeckteil anliegende Stellung vorgespannt ist. Alternativ kann bei Ausbildung des Abdeckteils mit einem Rollo dessen Wickelwelle in Drehverbindung mit einer Welle des Windschotts sein, so dass dieses aufgestellt wird, wenn das Rollo genügend weit abgewickelt ist.

Wie insbesondere aus Figur 8 ersichtlich, sind an der Seitenverkleidung des Fahrzeugs, beispielsweise an Klappenteilen, die in an sich bekannter Weise um parallel zur Fahrzeuglängsrichtung gerichtete Achsen schwenkbar sind, um Platz für das Verdeckgestänge freizugeben, oder an unbeweglichen Seitenverkleidungsteilen Aufnahmen 48, 50 vorgesehen, in die das in seiner Gebrauchsstellung verschwenkte Windschott beim Absenken des Verdeckkastendeckels derart eingreift, dass die Gebrauchsstellung des Windschotts stabilisiert ist. Dies geschieht beispielsweise dadurch, dass die Aufnahmen 48, 50 senkrechte Schlitze aufweisen, in die seitliche Bereiche des Windschotts eingreifen.

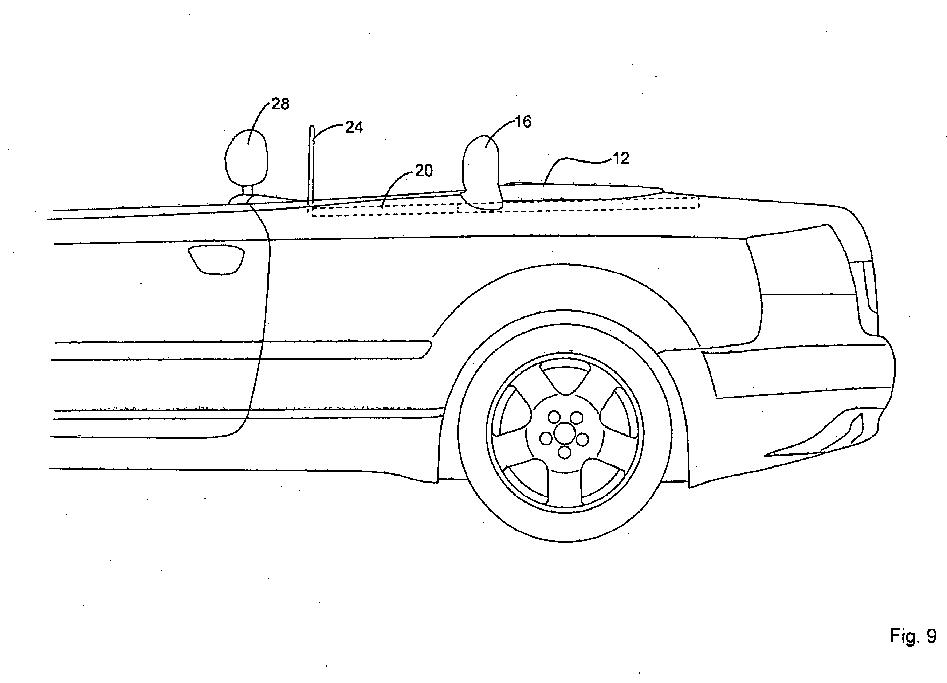

Figur 9 zeigt das in Figur 8 dargestellte Fahrzeug in Seitenansicht. Mit dem erfindungsgemäßen Verdeckkastendeckel ist es möglich, das Abdeckteil 20 jeweils so weit aus dem Verdeckkastendeckel 12 herauszufahren, dass sich das Windschott 24 an bezüglich der Fahrzeuglängsrichtung unterschiedliche Positionen der Vordersitze anpassen lässt. Es versteht sich, dass dazu der Antrieb des Windschotts 24 unabhängig vom Antrieb des Abdeckteils 20 sein muss. Bei einer solchen Ausführungsform ist es des weiteren möglich, das Abdeckteil in der Stellung der Anordnung gemäß Figur 6 in den Verdeckkastendeckel 12 zurückzufahren, so dass das Windschott 24 unmittelbar vom Vorderrand 14 des Verdeckkastendeckels 12 aus vorsteht und unmittelbar hinter den Kopfstützen 28 der Rücksitze angeordnet ist.

Der beschriebene Verdeckkastendeckel kann in unterschiedlichster Weise abgeändert werden. Beispielsweise können alle Betätigungen manuell erfolgen oder nur einige Betätigungen über Aktoren erfolgen. Weiter muss der Verdeckkastendeckel 12 nicht zwingend, wie in Figur 8 dargestellt, mit Ausnehmungen ausgebildet sein, durch die beispielsweise Überrollbügel ausfahren können. Das Windschott 24 kann in Ruhestellung an die Unterseite des Abdeckteils angeklappt sein. Abdeckteil und Windschott können in Ruhestellung vollständig im Inneren des Verdeckkastendeckels 12 aufgenommen sein. In einer abgeänderten Ausführungsform kann das Windschott 24 in seiner Ruhestellung gegenüber der Gebrauchsstellung um etwa 180° nach unten verschwenkt sein und ist dann im Fahrzeuginnenraum in dem Bereich zwischen den Hauptlagern des Verdeckgelenkmechanismus bzw. Verdeckgestänges aufgenommen. Das Abdeckteil 20 muss nicht als Rollo mit einem vorzugsweise feingemaschten Behang ausgebildet sein, sondern kann ein flächiges Bauteil sein, dessen Oberseite beispielsweise ebenfalls in Wagenfarbe lackiert ist, usw.

### BEZUGSZEICHENLISTE

- 10: 10 Scharnier
- 12: Verdeckkastendeckel
- 14: Vorderrand
- 16: Kopfstütze
- 18: Vordersitz
- 20: Abdeckteil
- 22: Vorderrand
- 24: Windschott
- 25: Antriebsmechanismus
- 26: Vordersitz
- 28: Kopfstütze
- 30: Steg
- 32: Steg
- 34: Führung
- 36: 36 Führung
- 38: Basis
- 40: Wickelwelle
- 42: Behang
- 44: Gurt
- 46: Gurt
- 48: Aufnahme
- 50: Aufnahme

## Patentansprüche

1. Verdeckkastendeckel mit integriertem Windschott für ein Cabrioletfahrzeug , welches Windschott (24) schwenkbar an einem Vorderrand (22) eines verschiebbar an dem Verdeckkastendeckel (12) angebrachten Abdeckteils (20) befestigt ist, wobei sich in einer Ruhestellung das Abdeckteil zusammen mit dem Windschott in einer in den Verdeckkastendeckel (12) integrierten Stellung befindet und in einer Gebrauchsstellung das Abdeckteil sich in einer den Verdeckkastendeckel zumindest teilweise verlängernden Stellung und das Windschott sich in einer aus der Ebene des Abdeckteils vorstehenden Stellung befindet,
**dadurch gekennzeichnet,**
**dass** das Abdeckteil (20) einen aus dem Verdeckkastendeckel (12) herausschiebbaren Rahmen (30, 32, 34, 36) enthält, zwischen dem und dem Verdeckkastendeckel ein Rollo (40, 42) angeordnet ist, dessen Behang (42) beim Herausschieben des Rahmens von einer Wickelwelle (40) abgewickelt wird und die Fläche des aus dem Verdeckkastendeckel herausbewegten Rahmens zumindest teilweise füllt, und dass das Windschott (24) schwenkbar an dem aus dem Verdeckkastendeckel (12) herausschiebbaren Endbereich des Rahmens gelagert ist.

2. Verdeckkastendeckel nach Anspruch 1,
**dadurch gekennzeichnet,**
**dass** das Windschott (24) in der Ruhestellung in Anlage an das Abdeckteil (20) geschwenkt ist.

3. Cabrioletfahrzeug nach Anspruch 1 oder 2,
**dadurch gekennzeichnet,**
**dass** der von der Wickelwelle (40) abwickelbare Rand des Behangs (42) mittels wenigstens eines Gurtes (44, 46) an dem Verdeckkastendeckel (12) befestigt ist.

4. Verdeckkastendeckel nach einem der Ansprüche 1 bis 3, **gekennzeichnet durch**
eine Antriebseinrichtung zum Antreiben der Bewegungen des Abdeckteils und des windschotts zwischen deren Ruhestellung und Gebrauchsstellung.

5. Verdeckkastendeckel nach Anspruch 4,
**dadurch gekennzeichnet,**
**dass** ein das Windschott (24) schwenkender Teil der Antriebseinrichtung durch die Bewegung des Abdeckteils (20) betätigt wird.

6. Cabrioletfahrzeug, enthaltend einen Verdeckkastendeckel nach einem der Ansprüche 1 bis 5, wobei das Abdeckteil (20) und das Windschott (24) bei aufwärts verschwenktem Verdeckkastendeckel (12) aus der Ruhestellung in die Gebrauchsstellung bewegbar sind und der Verdeckkastendeckel bei in Gebrauchsstellung befindlichem Abdeckteil und Windschott in seine das offene Verdeck abdeckende Stellung schwenkbar ist, in der das Abdeckteil den zwischen einem Bereich des Vorderrandes (14) des Verdeckkastendeckels und einer Rückseite eines Fahrer und/oder Beifahrersitzes (26) überdeckt und das Windschott (24) den Fahrersitz und/oder Beifahrersitz nach oben überragt.

7. Cabrioletfahrzeug nach Anspruch 6,
**dadurch gekennzeichnet,**
**dass** das Windschott (24) in seiner Gebrauchsstellung bei in das offene Verdeck abdeckende Stellung verschwenktem Verdeckkastendeckel (12) beidseitig in fahrzeugfesten Aufnahmen (48, 50) ablegbar ist.

## Claims

1. A hood compartment cover comprising an integrated wind deflector for a convertible vehicle, said wind deflector (24) being pivotally fixed to a front edge (22) of a cover member (20) which is movably fixed to the hood compartment cover (12), wherein, in an inoperative position, said cover member is in a position integrated in the hood compartment cover (12) together with the wind deflector, and in an operative position, said cover member is in a position at least partially extending the hood compartment cover and the wind deflector is in a position protruding from the plane of the cover member,
**characterised in that** the cover member (20) includes a frame (30, 32, 34, 36) which can be pushed out of the hood compartment cover (12), there being arranged between the frame (30, 32, 34, 36) and the hood compartment cover a blind (40, 42) whose fabric (42) is unwound from a winding shaft (40), when the frame is being pushed out, and which at least partially covers the surface of the frame moved out of the hood compartment cover, and that the wind deflector (24) is pivotally supported on the end region of the frame that can be pushed out of the hood compartment cover (12).

2. The hood compartment cover according to claim 1, **characterised in that** the wind deflector (24) is pivoted into contact with the cover member (20) in the inoperative position.

3. The convertible vehicle according to claim 1 or 2, **characterised in that** the edge of the fabric (42) that can be unwound from the winding shaft (40) is fixed to the hood compartment cover (12) by at least one belt (44, 46).

4. The hood compartment cover according to any one of claims 1 to 3, **characterised by** a drive means for driving the movements of the cover member and the wind deflector between their inoperative and operative positions.

5. The hood compartment cover according to claim 4, **characterised in that** a drive means portion pivoting the wind deflector (24) is actuated by the movement of the cover member (20).

6. A convertible vehicle including a hood compartment cover according to any one of claims 1 to 5, wherein the cover member (20) and the wind deflector (24) can be moved from the inoperative position to the operative position when the hood compartment cover (12) is pivoted upwardly, and when the cover member and wind deflector are in the operative position, the hood compartment cover can be pivoted into its position covering the open hood, in which the cover member covers the region between the front edge (14) of the hood compartment cover and a rear surface of a driver's and/or front passenger's seat (26) and the wind deflector (24) protrudes upwardly over the driver's seat and/or front passenger's seat.

7. The convertible vehicle according to claim 6, **characterised in that**, in the operative position both sides of the wind deflector (24) can be stowed in receiving members (48, 50), mounted fixed to the vehicle, when the hood compartment cover (12) is pivoted into the position covering the open hood.

## Revendications

1. Couvercle de coffre de capote comprenant un coupe-vent intégré pour un véhicule cabriolet, ledit coupe-vent (24) étant monté à pivotement sur un bord avant (22) d'un élément de couverture (20) qui est monté sur le couvercle de coffre de capote (12) de manière déplaçable, dans lequel, en position de repos, ledit élément de couverture se trouve dans une position où il est intégré dans le couvercle de coffre de capote (12) ensemble avec le coupe-vent, et en position d'utilisation, ledit élément de couverture se trouve dans une position prolongeant au moins partiellement le couvercle de coffre de capote et le coupe-vent se trouve dans une position faisant saillie du plan de l'élément de couverture,
**caractérisé en ce que** l'élément de couverture (20) présente un cadre (30, 32, 34, 36) que l'on peut pousser en dehors du couvercle de coffre de capote (12), un store (40, 42) étant disposé entre ledit cadre (30, 32, 34, 36) et le couvercle de coffre de capote, le tissu (42) de ce store (40, 42) étant déroulé d'un arbre d'enroulement (40) lorsque le cadre est poussé dehors et recouvrant au moins partiellement la surface du cadre déplacé en dehors du couvercle de coffre de capote, et **en ce que** le coupe-vent (24) est supporté à pivotement sur la région d'extrémité du cadre que l'on peut pousser en dehors du couvercle de coffre de capote (12).

2. Couvercle de coffre de capote selon la revendication 1, **caractérisé en ce que** le coupe-vent (24), en position de repos, est pivoté de manière à venir en contact avec l'élément de couverture (20).

3. Véhicule cabriolet selon la revendication 1 ou 2, **caractérisé en ce que** le bord du tissu (42) qui peut être déroulé de l'arbre d'enroulement (40) est fixé sur le couvercle de coffre de capote (12) par au moins une sangle (44, 46).

4. Couvercle de coffre de capote selon l'une quelconque des revendications 1 à 3, **caractérisé par** un moyen de commande destiné à commander les déplacements de l'élément de couverture et du coupe-vent entre leurs positions de repos et d'utilisation.

5. Couvercle de coffre de capote selon la revendication 4, **caractérisé en ce qu'**une partie du moyen de commande pivotant le coupe-vent (24) est actionnée par le déplacement de l'élément de couverture (20).

6. Véhicule cabriolet présentant un couvercle de coffre de capote selon l'une quelconque des revendications 1 à 5, dans lequel l'élément de couverture (20) et le coupe-vent (24) peuvent être déplacés de la position de repos vers la position d'utilisation lorsque le couvercle de coffre de capote (12) est pivoté vers le haut et, quand l'élément de couverture et le coupe-vent se trouvent dans la position d'utilisation, le couvercle de coffre de capote peut être pivoté dans sa position de recouvrement de la capote ouverte, dans laquelle l'élément de couverture recouvre la région entre le bord avant (14) du couvercle de coffre de capote et une face arrière d'un siège de chauffeur et/ou un siège de passager (26) et le coupe-vent (24) fait saillie vers le haut au-delà du siège de chauffeur et/ou du siège de passager.

7. Véhicule cabriolet selon la revendication 6, **caractérisé en ce qu'**en position d'utilisation, le coupe-vent (24) peut être rangé de ses deux côtés dans des éléments de réception (48, 50) lorsque le couvercle de coffre de capote (12) à été pivoté dans la position de recouvrement de la capote ouverte, lesdits éléments étant montés fixe au véhicule.
